(19) **Europäisches Patentamt / European Patent Office / Office européen des brevets**

(11) **EP 1 019 683 B1**

(12) **EUROPEAN PATENT SPECIFICATION**

(45) Date of publication and mention
of the grant of the patent:
**13.08.2008 Bulletin 2008/33**

(51) Int Cl.:
**G01F 25/00** (2006.01)     **B67D 5/08** (2006.01)

(21) Application number: **97913592.8**

(22) Date of filing: **07.11.1997**

(86) International application number:
**PCT/SE1997/001864**

(87) International publication number:
**WO 1998/020307 (14.05.1998 Gazette 1998/19)**

(54) **METHOD AND APPARATUS FOR CALIBRATION**

KALIBRIERVERFAHREN UND -VORRICHTUNG

PROCEDE ET DISPOSITIF D'ETALONNAGE

(84) Designated Contracting States:
**DE FR GB IT SE**

(30) Priority: **07.11.1996 SE 9604074**

(43) Date of publication of application:
**19.07.2000 Bulletin 2000/29**

(73) Proprietor: **DRESSER WAYNE AB**
**200 61 Malmö (SE)**

(72) Inventor: **OLSSON, Mats, E.**
**Austin, TX 78759 (US)**

(74) Representative: **Milanov, Nina Vendela Maria et al**
**Awapatent AB**
**P.O. Box 5117**
**200 71 Malmö (SE)**

(56) References cited:
**EP-A- 0 315 738**          **US-A- 4 358 947**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a method for calibrating an apparatus for determining the volume of fuel being dispensed from a fuel pump unit, preferably a petrol pump, according to the preamble to claim 1, and a calibratable apparatus for volume determination according to the preamble to claim 6.

### Description of the Prior Art

A volume determining apparatus to be used in a fuel pump unit at a petrol station must be able to carry out volume determination with a predetermined minimum accuracy for different volume flow rates when filling up and for different volumes. To achieve this accuracy, the apparatus must be calibrated in manufacture and subsequently at regular intervals.

DE 29 26 451 discloses a volume measuring apparatus for a fuel pump unit having a measuring chamber in which pistons are movably arranged. The pistons are displaced by the action of fuel flowing through the measuring chamber. The movement of the pistons is transmitted to a crankshaft, the rotation of which is a function of the volume of the fuel flowing through the measuring chamber. The crankshaft extends through the wall of the measuring chamber, and on its end located outside the measuring chamber, a pulse generator is arranged. The pulse generator emits a predetermined number of pulses for each revolution of the crankshaft.

If the proportionality factor between the number of pulses and the volume is known, it is possible to measure the volume of fuel which flows through the measuring chamber by counting the number of pulses emitted by the pulse generator and multiplying the counted number of pulses by the proportionality factor. The proportionality factor can be determined by a known volume of fuel being dispensed from the fuel pump unit and by determining the number of pulses generated by the pulse generator. Since the number of pulses emitted from the pulse generator is different for different volume measuring apparatus, depending on work tolerances and the stroke of the pistons, different proportionality factors will be obtained for different volume measuring apparatus.

However, the pulses are normally supplied from a pulse generator directly to a volume counter, which is incremented by a predetermined amount each time it receives a predetermined number of pulses. It is then desirable that the proportionality factor between the number of pulses and the volume be the same for different volume measuring apparatus. In other words, the same number of pulses should always be supplied to the counter when dispensing a given volume of fuel, independently of the function of the pulse generator.

This can be accomplished by manually adjusting the stroke of the pistons in the measuring chamber, such that the desired ratio of pulses to volume is obtained. However, several attempts may be required, before the desired ratio is obtained, and therefore this is a time-consuming and inaccurate calibrating method.

In the above-mentioned DE 29 26 451, a pulse correction unit is instead arranged after the pulse generator. In this pulse correction unit, the number of pulses counted during a working cycle is multiplied by a correction factor, thereby obtaining the desired ratio of pulses to volume. The correction factor is determined by calibration, the actually dispensed volume per working cycle being compared with a volume, measured by the apparatus, per working cycle, and a correction factor being calculated on the basis of the ratio of the actually dispensed volume to the measured volume. This correction factor is then adjusted manually with the aid of an adjusting member. The calculation of the correction factor and the manual adjustment thereof are, however, a source of error and besides increase the risk of somebody tampering with the apparatus.

EP 0 315 738 discloses a fuel pump unit, which comprises an integrated cylindrical tube, which constitutes a volume reference that is used in automatic calibration of the fuel pump unit. When calibrating, the volume flow of fuel is passed through the cylindrical tube by means of a piston. The number of pulses obtained from a pulse generator from the moment the piston passes a first predetermined level to the moment it passes a second predetermined level in the tube is counted. On the basis of the counted number of pulses and a desired number of pulses for the volume defined by the volume reference, an electronic control unit in the fuel pump unit calculates a correction factor which is used to correct the pulses generated by the pulse generator in subsequent volume determinations.

This calibration method suffers from the drawback that it is expensive and that it cannot easily be used for existing fuel pump units since they must be supplemented with a built-in volume reference. Moreover, the volume reference will of course be limited in size, which is disadvantageous in respect of accuracy. Finally, the calibration can only be carried out for a single calibration volume, which is a disadvantage when using different standard volumes for calibration in, for instance, Europe and the USA.

### Summary of the Invention

One object of the present invention is to provide a method for calibrating a volume determining apparatus of the type described by way of introduction, said method being carried out easily and quickly, which minimises the risk of errors and which results in great accuracy.

Another object is to make it possible to carry out the calibration while performing as few manual operations as possible.

One more object is to make it possible to carry out the calibration for a plurality of different calibration volumes.

A further object is to provide an apparatus of the type described by way of introduction which can be used for carrying out the method such that the above-mentioned objects are achieved.

These objects are achieved by a method and an apparatus having the features defined in claims 1 and 6, respectively. Preferred embodiments of the method and the apparatus are defined in the subclaims.

The inventive method thus concerns calibration of an apparatus for determining the volume of fuel being dispensed from a fuel pump unit, said apparatus comprising a pulse generator, which is adapted to generate pulses corresponding to a volume flow rate when dispensing fuel, and means for correcting the number of pulses generated by the pulse generator by at least one correction factor, such that the apparatus emits substantially a predetermined number of pulses per unit of volume of dispensed fuel.

By "substantially a predetermined number of pulses" is meant that the apparatus can be designed so as not to always emit exactly a predetermined number of pulses per unit of volume, but such that the deviation is so small that the desired measuring accuracy can be achieved.

In the inventive method, a signal is emitted to the apparatus to be calibrated that calibration should be effected. The signal can be emitted in many different ways, e.g. in optical, electric or magnetic manner.

Subsequently, the fuel pump unit is caused to dispense a calibration volume of a plurality of predetermined calibration volumes of fuel. The dispensed volume can be determined by the user in prior-art manner by means of a precalibrated pitcher. By using a calibration pitcher as a volume reference outside the fuel pump unit, different calibration volumes can easily be measured.

The rest of the calibration can be processed automatically by the volume determining apparatus. More specifically, the correction means count the number of pulses generated by the pulse generator when dispensing the calibration volume.

Moreover the correction means identify which of the predetermined calibration volumes has been dispensed. The operator dispensing the fuel from the fuel pump in the calibration pitcher thus need not himself input the size of the calibration volume in the fuel pump unit and thus risk making an error, but this is automatically determined by the apparatus.

More specifically, the correction means compare the counted number of pulses with at least one pulse number which is stored in advance in the apparatus. This pulse number may consist of the predetermined number of pulses per unit of volume of fuel dispensed, in which case the predetermined calibration volumes may consist of multiples of the unit of volume. If the predetermined number of pulses is 400 pulses per litre of fuel and the obtained number of pulses is 2050, the apparatus may, for instance, be adapted to select the multiple of the unit of volume essentially corresponding to 2050 pulses, i.e. 5 litres.

Alternatively, a plurality of pulse numbers may be stored in the apparatus, each pulse number corresponding to one of the predetermined calibration volumes. This alternative suits best when it should be possible to carry out calibration for different volumes which are not multiples of each other. The pulse numbers may, for instance, be stated as the predetermined ideal number of pulses that is to be output for a certain calibration volume with tolerances upwards and downwards, such that if the counted number of pulses is within the tolerances for a given pulse number, the dispensed volume is identified as the calibration volume corresponding to this pulse number.

The correction means then determine the correction factor on the basis of the number of pulses counted by the pulse generator, and the predetermined number of pulses corresponding to the identified calibration volume.

Finally, the correction factor is stored in the correction means to be used in the determination of fuel volume.

This is a very simple technique of carrying out the calibration. Since the apparatus itself calculates both the calibration volume and the correction factor, the risk of incorrect calculations, incorrect settings and manipulations is essentially eliminated. The calibration can be carried out quickly since it will immediately be correct and does not require any manual settings.

In a particularly preferred embodiment, the correction factor is determined to be an integer N, which is greater than one and which is such that if the correction means carry out one of the measures of disregarding, preferably skipping, a pulse for every Nth generated pulse and outputting a pulse in addition to the generated pulses for every Nth generated pulse when counting the number of pulses while dispensing fuel, the apparatus emits substantially the predetermined number of pulses per unit of volume. The different alternatives are, of course, used when the pulse generator generates more or fewer pulses per unit of volume than the predetermined number.

A calibratable volume determining apparatus according to the invention comprises a pulse generator and correction means for correcting the number of pulses generated by the pulse generator. The pulse generator can be of any type, optical, magnetic etc, which generates pulses corresponding to a volume flow rate and which does not always emit the desired number of pulses per unit of volume of fuel dispensed. It may be affected in some suitable manner by the volume flow rate anywhere between a pump and a nozzle for dispensing fuel. Preferably, the pulse generator, however, is connected to a shaft which is affected by the flow through a measuring chamber or a measuring means in the same manner as in the prior-art technique.

The correction means, which preferably are accomplished by means of a processor unit and its associated software, but which can also be accomplished by discrete logical circuits or a combination thereof, thus emit a number of pulses which in a known manner represents a volume. The apparatus may further comprise means for converting the pulses emitted by the correction means into volume, but this conversion can also be effected outside the actual volume determining apparatus.

For carrying out the calibration, the apparatus further comprises a counter, a calibration input, a signal processing device and a memory means. These components can be used for calibration only, but are used preferably also in volume determination for correcting the generated pulses.

The signal processing device and the counter are accomplished preferably by means of a processor unit and its associated software. This accomplishment permits easy maintenance and upgrading of the function.

The calibration has been described above as being carried out for pulses. Of course, it can be carried out in exactly the same manner if pulse edges are counted instead of pulses. In order not to unnecessarily burden the specification, reference is made in this application to pulses only. Thus, this term should here also comprise pulse edges.

Brief Description of the Drawings

The invention will now be described with reference to the accompanying drawings, which show embodiments and in which:

Fig. 1 is schematic block diagram of a calibratable apparatus for carrying out volume determination; and
Fig. 2 is a flow diagram of a preferred embodiment of the inventive calibration.

Description of the Preferred Embodiments

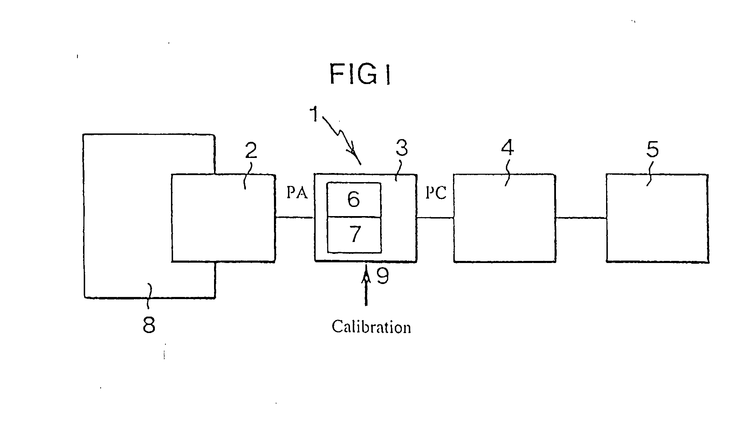

Fig. 1 shows schematically how an automatically calibratable apparatus 1 for fuel volume determination can be composed and arranged. In this embodiment, the apparatus comprises a pulse generator 2, a pulse correction unit 3, a fuel pump computer 4 and a volume counter 5.

The apparatus 1 is adapted to be arranged in a fuel pump unit. The pulse generator 2 is adapted to generate pulses corresponding to the volume flow rate when dispensing fuel from the fuel pump unit. To this end, the pulse generator 2 is arranged adjacent to the metering means 8 of the fuel pump unit, the metering means being arranged between a pump for pumping fuel from a fuel tank and a nozzle for dispensing the fuel. Depending on the type of pulse generator, some part of the pulse generator 2 can besides be arranged in the metering means.

The pulse generator 2 emits pulses PA to the pulse correction unit 3, which comprises a processor unit 6 with memory means 7 for storing correction factors and programs for carrying out the calibration according to the invention and volume determination. The pulse correction unit 3 further comprises an input 9, through which an operator can enter a calibration signal. When the pulse correction unit 3 is correctly calibrated, it corrects the number of pulses in such a manner that when a predetermined volume of fuel flows through the metering means, the pulse correction unit 3 will always emit substantially a predetermined number of pulses independently of how many pulses the specific pulse generator emits for the predetermined volume.

In volume determination, the corrected number of pulses PC is supplied continuously to the pump computer 4, where the pulses are processed in traditional manner and used for controlling the volume counter 5, which indicates the dispensed volume to the user. The pump computer 4 can thus function in the same manner for all fuel pump units independently of the function of the specific pulse generator 2, since it will always receive substantially the same number of pulses per unit of volume.

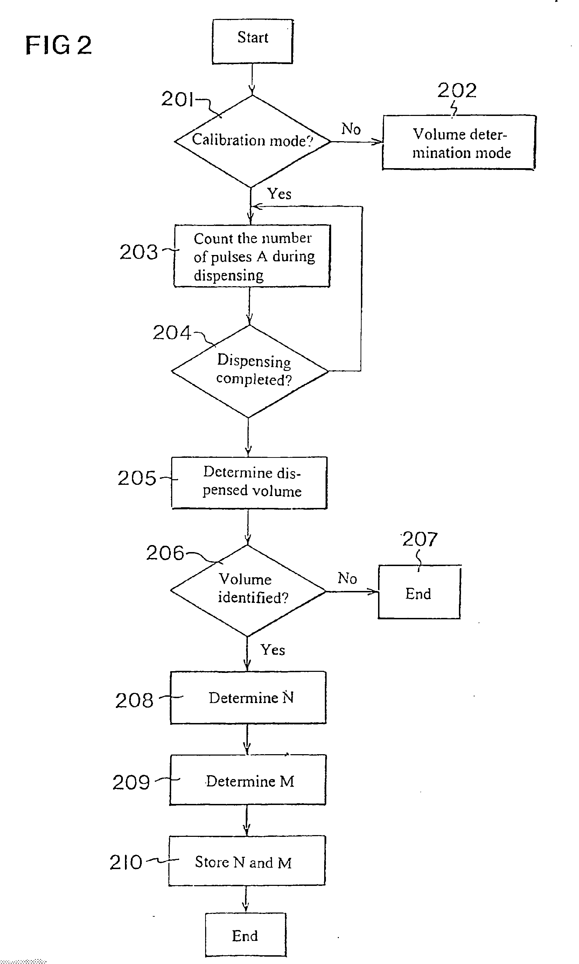

With reference to the flow diagram in Fig. 2, it will now be described how the pulse correction unit 3 can be calibrated for a specific pulse generator 2. In this embodiment, it is assumed that the pulse generator generates more pulses per unit of volume than the predetermined, ideal number of pulses per unit of volume that is to be output from the pulse correction unit 3, and that the correction is carried out by skipping, at regular intervals, the output of a pulse from the pulse correction unit. Furthermore, it is assumed that the predetermined number of pulses per unit of volume has already been stored in the memory means 7, as well as a number of pulse intervals, each corresponding to a predetermined calibration volume.

When the pulse correction unit is to be calibrated, the operator puts the pulse correction unit 3 in calibration mode by giving a calibration signal on the input 9 of the unit. This can take place, for instance, by the operator pressing a calibration button. When the pulse correction unit detects that it is in calibration mode, step 201, it performs the steps described below in the subsequent dispensing of fuel. If it is not in calibration mode, the pulse correction unit processes the subsequent dispensing of fuel as a normal dispensing for which the volume is to be determined, step 202.

When the operator has put the pulse correction unit in calibration mode, he dispenses a predetermined volume of fuel from the fuel pump unit. During dispensing, the pulse correction unit counts the number of pulses generated by the pulse generator during dispensing, step 203.

When the volume of fuel selected by the operator has been dispensed, which is determined by the operator by means of a calibrated pitcher, the operator signals on the input 9 of the pulse correction unit 3 that the dispensing operation is completed. When the pulse correction unit 3 detects this signal, step 204, it proceeds to step 205 and determines the volume that has been dispensed. This is carried out by comparing the counted number of pulses with the pulse intervals stored in the memory means 7. If the counted number of pulses is within one of these intervals, the pulse correction unit determines that the corresponding volume has been dispensed. If the counted number of pulses is not within one of the stored pulse intervals, it determines that no volume could be identified, step 206, and that the calibration therefore could not take place, whereupon the calibration is interrupted, step 207.

If a dispensed volume has been identified, the pulse correction unit calculates, in step 208, a first correction factor N as follows:

$$N = INT\ (A/(A-k))$$

wherein INT is the integer part of the expression within parentheses, A is the number of pulses received from the pulse generator, k is the predetermined, ideal number of pulses for the identified, dispensed volume, and N indicates the number of pulses which the pulse correction unit should receive before refraining from outputting a pulse for effecting a correction.

Subsequently, the pulse correction unit determines, step 209, a second correction factor M as follows:

$$M = k/(k-INT(A*(N-1)/N))$$

wherein INT, A, k and N have the same meaning as above.

M is used for correction of the decimal error that may arise when correcting by the correction factor N. The decimal error correction means that the pulse correction unit, for every Mth received pulse, refrains from carrying out the following correction which is carried out for every Nth pulse.

Finally, N and M are stored in the memory means 7 in the pulse correction unit, step 210, before completion of the calibration. Preferably, also the number of pulses A generated by the pulse generator 2 is stored in the memory means.

Example

Now supposing that the ideal number of pulses is 400 pulses per litre and that the pulse interval stored in the memory means 7 for 5 litres of fuel is 2000-2160 pulses. Assume further that, during calibration, the pulse correction unit receives 2077 pulses from the pulse generator when dispensing 5 litres of fuel from the fuel pump unit. The pulse correction unit then determines that 5 litres have been dispensed and that the ideal number of pulses is 2000. The pulse correction unit further calculates N as follows: N = INT (2077 / (2077-2000)) = 26. Thus, this means that in the volume determination, every 26th pulse is to be skipped in order to output substantially the ideal number of pulses from the pulse correction unit.

By using the correction factor N, exactly the ideal number of pulses will not be obtained in all cases. The number of pulses obtained when dispensing 5 litres of fuel can be determined as follows: p = INT(A*(N-1)/(N)), which in this example becomes 1997, which yields an error of 0.15%.

In order to further reduce the error, the second correction factor M is used, which in this case becomes 666. When the pulse correction unit has received 666 pulses, the subsequent correction by skipping should thus not be carried out. In this example, the use of M means that the pulse correction unit will output 2000 pulses for 5 litres.

The calibration can, of course, be carried out for a number of different volumes. Moreover, the calibration can be effected for different flow rates, in which case the flow rate when dispensing can be determined by counting the number of pulses generated per unit of time. Different correction factors for different flow rates can be stored.

The above Examples concern a case where the number of the generated pulses is greater than the desired number of pulses such that skipping of pulses must be carried out for correcting the number of pulses. The Examples are also applicable to the case where the number of generated pulses is smaller than the desired number pulses. The only modification needed in this case is to exchange the skipping for an addition of a pulse.

**Claims**

1. A method for calibrating an apparatus for determining the volume of fuel dispensed from a fuel pump unit, said apparatus comprising a pulse generator which is adapted to generate pulses corresponding to a volume flow rate when dispensing fuel, and means for correcting the number of pulses generated by the pulse generator by at least one correction factor, such that the correcting means emit substantially a predetermined number of pulses per unit of volume of dispensed fuel, comprising the steps of

    - signalling to the apparatus that calibration is to be effected;
    - making the fuel pump unit dispense a calibration volume of a plurality of predetermined calibration volumes;
    - making the correction means automatically:

        - count the number of pulses generated by the pulse generator when dispensing the fuel volume;

- identify which of said plurality of predetermined calibration volumes has been dispensed by comparing the counted number of pulses with at least one pulse number stored in advance in the apparatus;

- determine said at least one correction factor by means of the counted number of pulses and the predetermined number of pulses corresponding to the identified calibration volume; and

- store said at least one correction factor in the correction means for use in fuel volume determination.

**2.** The method as claimed in claim 1, wherein said at least one pulse number stored in advance in the apparatus consists of the predetermined number of pulses per unit of volume of fuel dispensed.

**3.** The method as claimed in claim 1 or 2, wherein said at least one pulse number consists of a plurality of pulse numbers, each pulse number corresponding to one of said plurality of predetermined calibration volumes, and wherein the correction means compare the counted number of pulses with said plurality of pulse numbers for determining the dispensed calibration volume.

**4.** The method as claimed in any one of the preceding claims, wherein said at least one correction factor is determined to be an integer N, which is greater than one and which is such that if the correction means carry out one of the measures of disregarding a pulse for every Nth generated pulse and outputting a pulse in addition to the generated pulses for every Nth generated pulse when counting the number of pulses during dispensing of fuel, the apparatus emits substantially said number of predetermined pulses per unit of volume.

**5.** The method as claimed in any one of the preceding claims, wherein the step of making the fuel pump unit dispense a calibration volume of a plurality of predetermined calibration volumes comprises using a calibrated pitcher outside the fuel pump unit as a volume reference.

**6.** A calibratable apparatus for determining the volume of fuel dispensed from a fuel pump unit, said apparatus comprising a pulse generator (2), which is adapted to generate pulses corresponding to a volume flow rate when dispensing fuel, and means (3) for correcting the number of pulses generated by the pulse generator by at least one correction factor, such that the correction means emit substantially a predetermined number of pulses per unit of volume of fuel that is being dispensed, said correction means (3) comprising an input (9) for receiving a signal indicating that calibration is to be carried out; a counter (6) for counting the number of pulses generated by the pulse generator when dispensing a calibration volume; a signal processing device (6) which is adapted to determine said at least one correction factor when receiving said signal indicating that calibration is to be carried out; and a memory means (7) for storing said at least one correction factor, **character - ised in that** the signal processing device (6) is adapted to identify which of a plurality of predetermined calibration volumes has been dispensed by comparing the counted number of pulses in the dispensing of the calibration volume and at least one pulse number stored in advance in the apparatus, and to determine said at least one correction factor by means of the counted number of pulses and the predetermined number of pulses corresponding to the identified calibration volume.

**7.** The apparatus as claimed in claim 6, wherein said at least one pulse number stored in advance in the apparatus consists of the predetermined number of pulses per unit of volume.

**8.** The apparatus as claimed in claim 6 or 7, wherein said at least one pulse number stored in advance in the apparatus consists of a plurality of pulse numbers, each corresponding to one of said plurality of predetermined calibration volumes.

**9.** The apparatus as claimed in claim 6, 7 or 8, wherein the counter and the signal processing device are accomplished by means of a processor unit and its associated software.

**Patentansprüche**

**1.** Verfahren zum Eichen einer Vorrichtung zur Bestimmung des von einer Kraftstoffpumpeneinheit abgegebenen Kraftstoffvolumens, wobei die Vorrichtung umfasst: einen Impulsgenerator, welcher dazu eingerichtet ist, einem Volumendurchfluss entsprechende Impulse zu erzeugen, wenn Kraftstoff abgegeben wird, und Mittel zum Korrigieren der Anzahl der von dem Impulsgenerator erzeugten Impulse um mindestens einen Korrekturfaktor, so dass die Korrekturmittel im Wesentlichen eine vorbestimmte Anzahl von Impulsen pro Volumeneinheit des abgegebenen Kraftstoffs aussenden, wobei das Verfahren die folgenden Schritte umfasst:

- Benachrichtigen der Vorrichtung, dass eine Eichung durchzuführen ist;
- Veranlassen der Kraftstoffpumpeneinheit, ein Eichvolumen von mehreren vorbestimmten Eichvolumina abzugeben;

- Veranlassen der Korrekturmittel, automatisch:

- die Anzahl der Impulse zu zählen, die von dem Impulsgenerator erzeugt werden, wenn das Kraftstoffvolumen abgegeben wird;
- zu identifizieren, welches von den mehreren vorbestimmten Eichvolumina abgegeben worden ist, durch Vergleichen der gezählten Anzahl von Impulsen mit mindestens einer Impulszahl, die im Voraus in der Vorrichtung gespeichert wurde;
- den mindestens einen Korrekturfaktor mittels der gezählten Anzahl von Impulsen und der vorbestimmten Anzahl von Impulsen, die dem identifizierten Eichvolumen entspricht, zu bestimmen; und
- den mindestens einen Korrekturfaktor zur Verwendung bei der Bestimmung des Kraftstoffvolumens in den Korrekturmitteln zu speichern.

2. Verfahren nach Anspruch 1, wobei die mindestens eine Impulszahl, die im Voraus in der Vorrichtung gespeichert wurde, aus der vorbestimmten Anzahl von Impulsen pro Volumeneinheit des abgegebenen Kraftstoffs besteht.

3. Verfahren nach Anspruch 1 oder 2, wobei die mindestens eine Impulszahl aus mehreren Impulszahlen besteht, wobei jede Impulszahl einem von den mehreren vorbestimmten Eichvolumina entspricht und wobei die Korrekturmittel die gezählte Anzahl von Impulsen mit den mehreren Impulszahlen vergleichen, um das abgegebene Eichvolumen zu bestimmen.

4. Verfahren nach einem der vorhergehenden Ansprüche, wobei der mindestens eine Korrekturfaktor als eine ganze Zahl N bestimmt wird, welche größer als eins ist und welche so beschaffen ist, dass, wenn die Korrekturmittel eine der Maßnahmen Ignorieren eines Impulses für jeden N-ten erzeugten Impuls und Ausgeben eines Impulses zusätzlich zu den erzeugten Impulsen für jeden N-ten erzeugten Impuls durchführen, wenn sie die Anzahl der Impulse während des Abgebens von Kraftstoff zählen, die Vorrichtung im Wesentlichen die Anzahl von vorbestimmten Impulsen pro Volumeneinheit aussendet.

5. Verfahren nach einem der vorhergehenden Ansprüche, wobei der Schritt des Veranlassens der Kraftstoffpumpeneinheit, ein Eichvolumen von mehreren vorbestimmten Eichvolumina abzugeben, die Verwendung eines geeichten Bechers außerhalb der Kraftstoffpumpeneinheit als eine Bezugsbasis für das Volumen umfasst.

6. Eichfähige Vorrichtung zur Bestimmung des von einer Kraftstoffpumpeneinheit abgegebenen Kraftstoffvolumens, wobei die Vorrichtung umfasst: einen Impulsgenerator (2), welcher dazu eingerichtet ist, einem Volumendurchfluss entsprechende Impulse zu erzeugen, wenn Kraftstoff abgegeben wird, und Mittel (3) zum Korrigieren der Anzahl der von dem Impulsgenerator erzeugten Impulse um mindestens einen Korrekturfaktor, so dass die Korrekturmittel im Wesentlichen eine vorbestimmte Anzahl von Impulsen pro Volumeneinheit des Kraftstoffs, welcher abgegeben wird, aussenden, wobei die Korrekturmittel (3) einen Eingang (9) zum Empfangen eines Signals, das angibt, dass eine Eichung durchzuführen ist; einen Zähler (6) zum Zählen der Anzahl der Impulse, die von dem Impulsgenerator erzeugt werden, wenn ein Eichvolumen abgegeben wird; eine Signalverarbeitungsvorrichtung (6), welche dazu eingerichtet ist, den mindestens einen Korrekturfaktor zu bestimmen, wenn das Signal empfangen wird, das angibt, dass eine Eichung durchzuführen ist; und ein Speichermittel (7) zum Speichern des mindestens einen Korrekturfaktors umfassen, **dadurch gekennzeichnet, dass** die Signalverarbeitungsvorrichtung (6) dazu eingerichtet ist, durch Vergleichen der gezählten Anzahl von Impulsen beim Abgeben des Eichvolumens und mindestens einer Impulszahl, die im Voraus in der Vorrichtung gespeichert wurde, zu identifizieren, welches von den mehreren vorbestimmten Eichvolumina abgegeben worden ist, und den mindestens einen Korrekturfaktor mittels der gezählten Anzahl von Impulsen und der vorbestimmten Anzahl von Impulsen, die dem identifizierten Eichvolumen entspricht, zu bestimmen.

7. Vorrichtung nach Anspruch 6, wobei die mindestens eine Impulszahl, die im Voraus in der Vorrichtung gespeichert wird, aus der vorbestimmten Anzahl von Impulsen pro Volumeneinheit besteht.

8. Vorrichtung nach Anspruch 6 oder 7, wobei die mindestens eine Impulszahl, die im Voraus in der Vorrichtung gespeichert wird, aus mehreren Impulszahlen besteht, wobei jede einem von den mehreren vorbestimmten Eichvolumina entspricht.

9. Vorrichtung nach Anspruch 6, 7 oder 8, wobei der Zähler und die Signalverarbeitungsvorrichtung mittels einer Prozessoreinheit und ihrer zugehörigen Software realisiert sind.

**Revendications**

1. Méthode de calibrage d'un appareil pour déterminer le volume d'essence distribué à partir d'un ensemble de pompe à essence, ledit appareil comprenant un générateur d'impulsions qui est adapté pour générer des impulsions correspondant à un débit de volume lorsque l'essence est distribuée, ainsi que des moyens permettant de corriger le nombre d'impulsions générées par le générateur d'impulsions selon au moins un facteur de correction, de manière à ce que les moyens de correction émettent substantiellement un nombre prédéterminé d'impulsions par unité de volume d'essence distribuée, comprenant les étapes suivantes :

- signaler à l'appareil que la calibration doit être effectuée ;
- amener l'ensemble de pompe à essence à distribuer un volume de calibrage parmi une pluralité de volumes de calibrage prédéterminés ;
- amener les moyens de correction à effectuer automatiquement les actions suivantes :

- comptage du nombre d'impulsions générées par le générateur d'impulsions lorsque le volume d'essence est distribué ;
- identification, parmi la pluralité de volumes de calibrage prédéterminés, de celui ayant été distribué, à l'aide d'une comparaison du nombre d'impulsions comptées avec au moins un nombre d'impulsions stocké préalablement dans l'appareil ;
- détermination dudit au moins un facteur de correction au moyen du nombre d'impulsions comptées et du nombre d'impulsions prédéterminé correspondant au volume de calibrage identifié ; et
- stockage dudit au moins un facteur de correction dans les moyens de correction pour l'utilisation dans la détermination du volume d'essence.

2. Méthode selon la revendication 1, dans laquelle ledit au moins un nombre d'impulsions stocké préalablement dans l'appareil consiste dans le nombre prédéterminé d'impulsions par unité de volume d'essence distribué.

3. Méthode selon l'une des revendications 1 ou 2, dans laquelle ledit au moins un nombre d'impulsions consiste dans une pluralité de nombre d'impulsions, chacun des nombres d'impulsions correspondant à l'un parmi la pluralité de volumes de calibrage prédéterminés, et dans laquelle les moyens de correction comparent le nombre d'impulsions comptées avec ladite pluralité de nombres d'impulsions afin de déterminer le volume de calibrage distribué.

4. Méthode selon l'une quelconque des revendications précédentes, dans laquelle ledit au moins un facteur de correction est déterminé pour être un nombre entier N supérieur à un, tel que si les moyens de correction exécutent l'une des mesures consistant à ignorer une impulsion pour chaque Nième impulsion générée et à émettre une impulsion en plus des impulsions générées pour chaque Nième impulsion générée lors du comptage du nombre d'impulsions pendant la distribution d'essence, l'appareil émet substantiellement ledit nombre d'impulsions prédéterminé par unité de volume.

5. Méthode selon l'une quelconque des revendications précédentes, dans laquelle l'étape consistant à amener l'ensemble de pompe à essence à distribuer un volume de calibrage parmi une pluralité de volumes de calibrage prédéterminés comprend l'utilisation d'un pot calibré à l'extérieur de l'ensemble de pompe à essence, en tant que volume de référence.

6. Appareil susceptible d'être calibré pour déterminer le volume d'essence distribué à partir d'un ensemble de pompe à essence, ledit appareil comprenant un générateur d'impulsions (2) adapté pour générer des impulsions correspondant à un débit de volume lorsque l'essence est distribuée, ainsi que des moyens (3) permettant de corriger le nombre d'impulsions générées par le générateur d'impulsions selon au moins un facteur de correction, de telle manière que les moyens de correction émettent substantiellement un nombre prédéterminé d'impulsions par unité de volume d'essence distribuée, lesdits moyens de correction (3) comprenant une entrée (9) pour recevoir un signal indiquant que le calibrage doit être effectué ; un compteur (6) pour compter le nombre d'impulsions générées par le générateur d'impulsions lors de la distribution d'un volume de calibrage ; un dispositif de traitement de signal (6) adapté pour déterminer ledit au moins un facteur de correction lors de la réception dudit signal indiquant que le calibrage doit être effectué ; et un moyen de mise en mémoire (7) pour stocker ledit au moins un facteur de correction, **caractérisé en ce que** le dispositif de traitement de signal (6) est adapté pour identifier lequel parmi une pluralité de volumes de calibrage prédéterminés a été distribué, en comparant le nombre d'impulsions comptées lors de la distribution du volume de calibrage avec au moins un nombre d'impulsions stocké préalablement dans l'appareil, et pour déterminer ledit au moins un facteur de calibrage au moyen du nombre d'impulsions comptées et le nombre d'impulsions prédéterminé correspondant au volume de calibrage identifié.

7. Appareil selon la revendication 6, **caractérisé en ce que** ledit au moins un nombre d'impulsions stocké préalablement dans l'appareil consiste dans le nombre prédéterminé d'impulsions par unité de volume.

8. Appareil selon l'une des revendications 6 ou 7, dans lequel ledit au moins un nombre d'impulsions stocké préalablement dans l'appareil consiste dans une pluralité de nombres d'impulsions, chacun correspondant à l'un parmi la pluralité de volumes de calibrage prédéterminés.

9. Appareil selon l'une des revendications 6, 7 ou 8, dans lequel le compteur et le dispositif de traitement de signaux sont conçus à l'aide d'une unité de processeur et du logiciel qui l'accompagne.

FIG 1

FIG 2

Start

201 — Calibration mode? →No→ 202 Volume determination mode

↓ Yes

203 — Count the number of pulses A during dispensing

204 — Dispensing completed?

205 — Determine dispensed volume

206 — Volume identified? →No→ 207 End

↓ Yes

208 — Determine N

209 — Determine M

210 — Store N and M

End

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2926451

- EP 0315738 A